# EUROPÄISCHE PATENTSCHRIFT

(11) **EP 0 978 364 B1**
(45) Veröffentlichungstag und Bekanntmachung des Hinweises auf die Patenterteilung: **25.09.2002**
(21) Anmeldenummer: 99890256.3
(22) Anmeldetag: 04.08.1999
(51) Int. Cl.: B29C 45/00, B29C 45/20, B29C 45/76, B29C 45/27

(54) **Einspritzdüse für eine Spritzgussform**
Injector nozzle for an injection mould
Buse d'injection pour un moule à injection

(30) Priorität: 06.08.1998 AT 135498
(43) Veröffentlichungstag der Anmeldung: 09.02.2000
(73) Patentinhaber: Sterner, Franz, 4614 Marchtrenk (AT)
(72) Erfinder: Sterner, Franz, 4614 Marchtrenk (AT)
(74) Vertreter: Hübscher, Gerhard, Dipl.-Ing.

(56) Entgegenhaltungen:
- EP-A- 0 162 037
- WO-A-97/27988
- PATENT ABSTRACTS OF JAPAN vol. 007, no. 126 (M-219), 31. Mai 1983 (1983-05-31) & JP 58 045037 A (TOSHIBA KIKAI KK), 16. März 1983 (1983-03-16)
- PATENT ABSTRACTS OF JAPAN vol. 013, no. 593 (M-914), 27. Dezember 1989 (1989-12-27) & JP 01 249417 A (NIIGATA ENG CO LTD), 4. Oktober 1989 (1989-10-04)

## Beschreibung

Die Erfindung bezieht sich auf eine Einspritzdüse für eine Spritzgußform zum Herstellen von Spritzgußteilen aus warmverfestigenden oder vulkanisierenden Materialien, insbesondere Elastomeren, die zur unmittelbaren Einspritzung des Materials mit einer aus einem Kühlmantel vorragenden Düsenspitze in eine Einspritzöffnung der temperierten zwei- oder mehrteiligen Spritzgußform einsetzbar bzw. an diese Einspritzöffnung ansetzbar ist, wobei der Einspritzkanal in der Düsenspitze einen gegenüber dem durch den gekühlten Düsenkörper verlaufenden Zufuhrkanal vielfach kleineren Querschnitt unter 1 mm² aufweist.

Einspritzdüsen der eingangs genannten Art sowie mit ihnen ausgestattete Spritzgußformen und Verfahren zur Herstellung von Spritzgußteilen sind Gegenstand der eigenen EP 0 162 037 B. Wie dort beschrieben wurde, ist es bei einem Querschnitt des Zufuhrkanales unter 1 mm² praktisch nicht möglich, eine diesen Zufuhrkanal im Endbereich abschließende, verstellbare Düsennadel vorzusehen und es wird daher häufig angestrebt, aus dem Einspritzmaterial in der Einspritzdüse einen Endpfropfen zu erzeugen, der beim Öffnen der Form nach einem Spritzgußvorgang den Einspritzkanal verschließt, also ein Nachströmen des Einspritzmaterials verhindert und beim nächsten Spritzgußvorgang vom nachströmenden flüssigen, gekühlten Material ausgestoßen wird, was möglich ist, da bei derartigen Einspritzmaschinen mit Drücken in der Größenordnung von einigen 100 bar gearbeitet wird. Nachteilig ist, daß auch dann, wenn am Austrittsende der Düsenspitze eine Verjüngung im Kanal vorgesehen wird, Größe und insbesondere Länge dieses Pfropfens nicht genau definiert sind, so daß es vorkommen kann, daß der Pfropfen bei der Entformung am Spritzgußteil haften bleibt und mit diesem herausgezogen wird, wobei aus der Düse flüssiges Material nachströmen kann und der Spritzgußteil selbst durch den anhaftenden Pfropfen unbrauchbar wird bzw. zumindest einer Nachbearbeitung bedarf.

Aus der DD 253 975 A ist es bekannt, den Düsenquerschnitt am Austrittsende einer Spritzgußmaschine für die Plastverarbeitung dadurch zu verändern, daß im Düsenkanal Vertiefungen vorgesehen werden und ein zugeordnete Vorsprünge aufweisender Düsendorn relativ zu diesen Vertiefungen verdrehbar angeordnet wird, so daß sich der Überdeckungsgrad mit den Vertiefungen und damit der Durchtrittsquerschnitt verändert.

Aufgabe der Erfindung ist es demnach, die für Einspritzdüsen der eingangs genannten Art aufgezeigten Schwierigkeiten zu beseitigen und eine Einspritzdüse anzugeben, die auch bei hohen Produktionsraten voll zufriedenstellend arbeitet.

Die gestellte Aufgabe wird bei einer Einspritzdüse der eingangs genannten Art dadurch gelöst, daß im Einspritzkanal mit Abstand von der Austrittsöffnung Profilierungen, z. B. in Form von Vorsprüngen, Hinterschneidungen, Ringnuten oder Ringkämmen vorgesehen sind.

Die beschriebene Ausgestaltung ermöglicht es, bei der Herstellung der Spritzgußteile in der Weise vorzugehen, daß die Düsenspitze vor dem öffnen der Form zum Auswerfen des Spritzgußteiles wenigstens bis in die Profilierungen auf die Verfestigungs- bzw. Vulkanisationstemperatur des Materials erwärmt wird, so daß ein auch von der Profilierung gehaltener, beim nächsten Spritzgußvorgang in das Formnest auszustoßender Pfropfen aus dem Einspritzmaterial entsteht, von dem der Spritzgußteil bei seiner Entformung abgerissen wird.

Größe und Länge des Pfropfens sind durch die erfindungsgemäße Ausgestaltung eindeutig definiert und der Pfropfen erhält an der Profilierung eine zusätzliche Unterstützung, durch die verhindert wird, daß bei seinem nun genau an der Anspritzstelle am Formling erfolgenden Abtrennen vom Spritzgußteil ein Herausziehen mit diesem Spritzgußteil vor sich gehen kann. Praktisch wird in den meisten Fällen die Erwärmung der Düsenspitze durch Wärmeleitung aus der Form und zum Teil auch über das in der Form aushärtende bzw. vulkanisierende Material erfolgen. Bringt man die Profilierung, wie beschrieben, im Bereich der Düsenspitze an, so verringert sich im Profilierungsbereich der die Wärmeleitung bewirkende Querschnitt der Düsenspitze selbst, so daß deren Erwärmung bis zum Austrittsende begünstigt, die Wärmeableitung zum gekühlten anschließenden Düsenkörper aber verringert wird.

Weitere Einzelheiten und Vorteile des Erfindungsgegenstandes entnimmt man der nachfolgenden Zeichnungsbeschreibung. In der Zeichnung ist der Erfindungsgegenstand beispielsweise veranschaulicht. Es zeigen
- Fig. 1: eine Einspritzdüse in Seitenansicht,
- Fig. 2: einen Längsschnitt durch einen die Düsenspitze enthaltenden Ansatzteil der Einspritzdüse und die
- Fig. 3 und 4: Ausführungsvarianten mit möglichen Profilierungen im Zuge des Ein-spritzkanales.

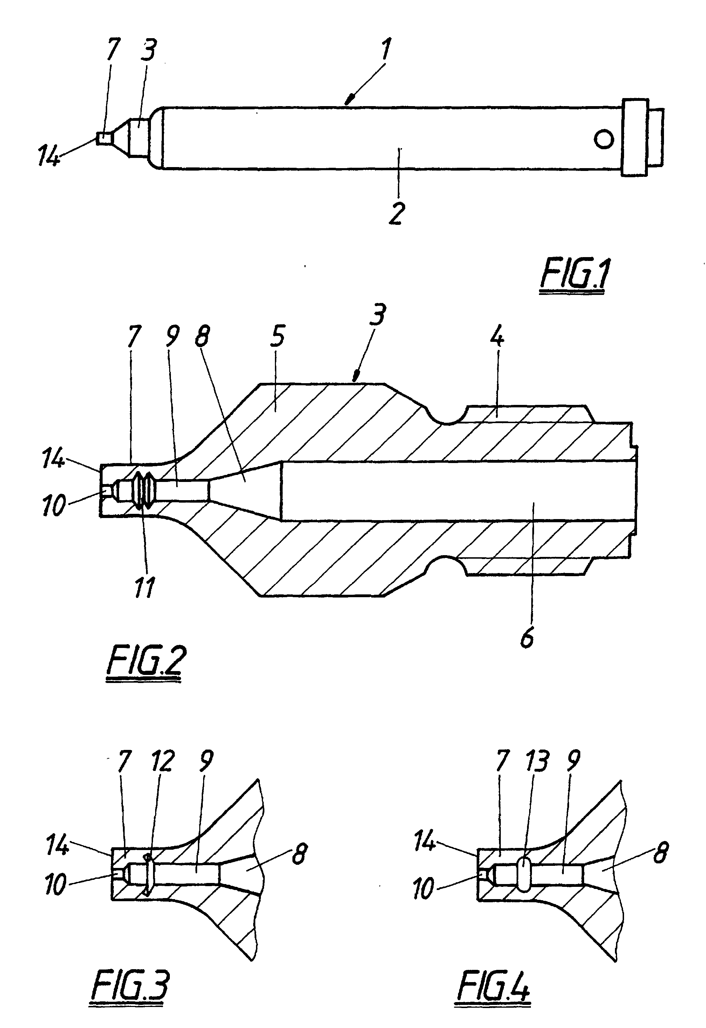

Die Einspritzdüse 1 nach Fig. 1 besitzt einen innerhalb eines Kühlmantels 2 untergebrachten Düsenkörper, der zweiteilig ausgeführt ist, um beim Verschleiß eine Auswechslung des Ansatzteiles 3 nach Fig. 2 zu ermöglichen. Dieser Ansatzteil besitzt ein Gewindeende 4, mit dem er an den zweiten Teil des Düsenkörpers anschließbar ist. Zur Erleichterung der Handhabung kann der anschließende Teil 5 nach Art einer Mutter mehreckig ausgebildet sein. Durch den Düsenkörper führt ein Zufuhrkanal 6 für das Einspritzmaterial, der sich gegen eine Düsenspitze 7 zu bei 8 konisch zu einem Einspritzkanal 9 verengt, der seinerseits noch einmal gegen eine Austrittsöffnung 10 abgesetzt bzw. verjüngt ist.

Mit Abstand von der Austrittsöffnung sind im Einspritzkanal 9 Profilierungen vorgesehen, die nach Fig. 2 aus zwei von einem Ringkamm getrennten Ringnuten 11, nach Fig. 3 aus einer schräg eingeschnittenen Ringnut 12 und nach Fig. 3 aus einer anders profilierten Ringnut 13 bestehen können. Es sind auch Kombinationen der beschriebenen Profilierungen möglich, wobei nach einer weiteren Variante der innere Teil des Einspritzkanales über einen größeren Teil seiner Länge Feinprofilierungen aufweisen kann. Auch die Profilierungen 11 - 13 nach den Ausführungsbeispielen können wesentlich geringere Tiefen als dargestellt haben.

Die Düsenspitze 7 wird jeweils mit ihrem Ende 14 in die Einspritzöffnung einer Spritzgußform eingesetzt. Nach einer bevorzugten Ausführung bildet die Düsenspitze in der eingesetzten Stellung selbst einen Teil der Wandung des Formnestes. Es ist aber auch möglich, am Formnest eine durch einen Bereich relativ geringer Wandstärke der Form führende Einspritzöffnung z. B. mit einem der Öffnung 10 entsprechenden Durchmesser vorzusehen und die Düsenspitze 7 mit fluchtender Öffnung 10 dort anzusetzen.

## Patentansprüche

1. Einspritzdüse für eine Spritzgußform zum Herstellen von Spritzgußteilen aus warmverfestigenden oder vulkanisierenden Materialien, insbesondere Elastomeren, die zur unmittelbaren Einspritzung des Materials mit einer aus einem Kühlmantel (2) vorragenden Düsenspitze (7) in eine Einspritzöffnung der temperierten zwei- oder mehrteiligen Spritzgußform einsetzbar bzw. an diese Einspritzöffnung ansetzbar ist, wobei der Einspritzkanal (9) in der Düsenspitze (7) einen gegenüber dem durch den gekühlten Düsenkörper (3) verlaufenden Zufuhrkanal (6) vielfach kleineren Querschnitt unter 1 mm² aufweist, **dadurch gekennzeichnet, daß** im Einspritzkanal (9) mit Abstand von der Austrittsöffnung (10) Profilierungen (11, 12, 13), z. B. in Form von Vorsprüngen, Hinterschneidungen, Ringnuten oder Ringkämmen vorgesehen sind.

## Claims

1. An injection nozzle for an injection moulding mould for making injection mouldings of thermosetting or vulcanising materials, particularly elastomers, which nozzle, for the direct injection of the material, can be inserted, by a nozzle tip (7) projecting from a cooling jacket (2), into an injection opening of the temperature-controlled two-part or multi-part injection moulding mould, or can be applied to said injection opening, the injection duct (9) in the nozzle tip (7) having a cross-section below 1 mm², which is many times smaller than the feed duct (6) extending through the cooled nozzle body (3), **characterised in that** profilings (11, 12, 13), for example in the form of projections, undercuts, annular grooves or annular combs, are provided in the injection duct (9) at a distance from the outlet aperture (10).

## Revendications

1. Buse d'injection pour un moule d'injection pour la fabrication de pièces moulées par injection en des matériaux se solidifiant à chaud ou vulcanisant, en particulier des élastomères, qui, pour effectuer l'injection directe du matériau, est susceptible d'être insérée, par une pointe de buse (7) faisant saillie hors d'une enveloppe de refroidissement (2), dans une ouverture du moule à injection en deux parties ou plus, soumis à une régulation de température, ou la buse d'injection pouvant être appliquée sur cette ouverture d'injection, le canal d'injection (9) ménagé dans la pointe de buse (7) présentant une section transversale qui, par rapport à celle du canal d'amenée (6) s'étendant à travers le corps de buse (3) refroidi, est de plusieurs fois inférieure, d'une aire inférieure à 1 mm², **caractérisé en ce que** des profilages (11, 12, 13), réalisés par exemple sous la forme de saillies, de contre-dépouilles, de gorges annulaires ou de chambres annulaires, sont prévus dans le canal d'injection (9), à distance de l'ouverture de sortie (10).
